# EUROPÄISCHE PATENTSCHRIFT

(11) **EP 3 270 490 B1**
(45) Veröffentlichungstag und Bekanntmachung des Hinweises auf die Patenterteilung: **29.04.2020**
(21) Anmeldenummer: 17020295.6
(22) Anmeldetag: 12.07.2017
(51) Int. Cl.: H02K 5/167, H02K 7/09, F04B 43/04, F04B 45/047, F04B 39/00, F04B 39/12, H02K 5/24, H02K 7/075, H02K 7/14

(54) **PUMPE UND VERFAHREN ZUR VERRINGERUNG ODER BESEITIGUNG VON STÖRGERÄUSCHEN UND/ODER VIBRATIONEN BEI PUMPEN**
PUMP AND METHOD FOR REDUCING OR ELIMINATING NOISE AND/OR VIBRATIONS FOR PUMPS
POMPE ET PROCÉDÉ DE RÉDUCTION OU D'ÉLIMINATION DES BRUITS PARASITES ET/OU DES VIBRATIONS DANS LES POMPES

(30) Priorität: 13.07.2016 DE 102016008421; 14.10.2016 DE 102016012252
(43) Veröffentlichungstag der Anmeldung: 17.01.2018
(73) Patentinhaber: Schwarzer Precision GmbH & Co. KG, 45141 Essen (DE)
(72) Erfinder: Schwarzer, Marcus, 45259 Essen (DE); Hoffmann, Heiko, 44269 Dortmund (DE)
(74) Vertreter: Von Rohr Patentanwälte Partnerschaft mbB

(56) Entgegenhaltungen:
- DE-A1- 2 741 062
- DE-A1- 3 921 084
- DE-A1-102005 045 919
- GB-A- 2 201 841
- US-A1- 2015 076 838

## Beschreibung

Die Erfindung betrifft eine Pumpe, insbesondere eine Miniaturpumpe, weiter insbesondere eine Miniatur-Membranpumpe, vorzugsweise mit einem Fördervolumen von weniger als 10 l/min, weiter vorzugsweise von weniger als 1000 ml/min, besonders bevorzugt mit einem Fördervolumen von weniger als 500 ml/min, mit einer Pumpenbaugruppe gemäß dem Oberbegriff von Anspruch 1.

Darüber hinaus betrifft die Erfindung ein Verfahren zur Verringerung oder Beseitigung von Störgeräuschen und/oder Vibrationen bei Pumpen, insbesondere bei Miniaturpumpen, weiter insbesondere bei Miniatur-Membranpumpen, wobei die Pumpe vorzugsweise ein Fördervolumen von weniger als 10 l/min, weiter vorzugsweise von weniger als 1000 ml/min, besonders bevorzugt von weniger als 500 ml/min, aufweist, gemäß dem Oberbegriff von Anspruch 9.

Die Einsatzbereiche von Miniaturpumpen sind vielfältig. Beispielsweise im Bereich medizintechnischer Anwendungen kommen Miniaturpumpen bei der Therapierung von Schlafstörungen/dem Schlafapnoesyndrom zum Einsatz, wobei der Patient während des Schlafs eine Nasen- oder Gesichtsmaske tragen muss, die über einen Schlauch an eine Miniaturpumpe angeschlossen ist. Die Luft wird dabei aktiv durch die Nase in die Lunge gepumpt, so dass der Atemweg über den Überdruck offenbleibt. Bei der Wunddrainage wird mit einer Miniaturpumpe ein Wundverband mit Vakuum beaufschlagt, um die Wundheilung zu verbessern, Miniaturpumpen der in Rede stehenden Art werden darüber hinaus beispielsweise in Operationssaugern für die medizinische Absaugung, in medizinischen Lagerungsmatratzen und in Pipetten eingesetzt. Ebenfalls können Miniaturpumpen in meist tragbaren Geräten zur Gasanalyse (Atemgase, Rauchgase etc.) zum Einsatz kommen. Auch außerhalb der Medizintechnik, beispielsweise im Bereich der Dentaltechnik, in Kaffeemaschinen oder im industriellen Anwendungsbereich, kommen Miniaturdruck- oder Miniaturvakuumpumpen zum Einsatz. Es versteht sich, dass die vorgenannten Anwendungsbereiche nicht abschließend zu verstehen sind.

Miniaturpumpen müssen höchsten Anforderungen genügen. Hierzu zählt insbesondere eine hohe Leistungsfähigkeit bei geringer Baugröße. Aufgrund der Anforderungen an eine geringe Baugröße und aus Wirtschaftlichkeitsgründen werden für Miniaturpumpen oft Elektromotoren als Antriebseinheit eingesetzt, deren Motor- bzw. Antriebswellen in einem Motorgehäuse mit einem axialen Wellenspiel gelagert sind. Insbesondere ist in der Regel keine Kugellagerung vorgesehen, die axiale Kräfte aufnehmen kann. In vielen kleinen Elektromotoren befinden sich beispielsweise Sinterlager, die als Gleitbuchsen in Linearlagern dienen. Kommt es aufgrund von Bewegungen der Pumpe zu einer Veränderung der Lage der Motorwelle relativ zur Horizontallage und wird eine axiale Last auf die Motorwelle ausgeübt, so kann es zu einer Verschiebung der Motorwelle im Inneren des Motorgehäuses kommen. Teile der Motorwelle können dann in axialer Richtung gegen das Motorgehäuse oder Teile davon oder auch gegen ein zur radialen Wellenlagerung vorgesehenes Gleitlager wirken, was beim Motorbetrieb zu Vibrationen der Motorwelle und/oder zu Störgeräuschen führen kann. Vibrationen und die Geräuschentwicklung sind bei Miniaturpumpen unerwünscht, insbesondere, wenn die Pumpen körpernah eingesetzt werden, was vor allem für Bereiche der Medizintechnik gilt. Bei Miniatur-Membranpumpen ist daher im Stand der Technik bereits versucht worden, das Geräusch- und Vibrationsverhalten der Motorwelle durch Vorspannen des Pleuels, welches auf eine Membran der Membranpumpe wirkt und über einen Exzenter mit der Motorwelle verbunden ist, insbesondere durch Schiefstellen des Pleuels, zu beeinflussen und Vibrationen und/oder Störgeräusche zu verringern. Diese Lösung hat sich jedoch in der Praxis als wenig langzeitstabil erwiesen.

Die DE 27 41 062 A1 offenbart eine Pumpe mit einem Außengehäuse, in dem ein Rotor mit einem axialen Spiel gelagert ist. Darüber hinaus sind innerhalb des Gehäuses zwei Magnetsysteme vorgesehen, über die Zugkräfte auf den Rotor ausgeübt werden können, wobei sich die Zugkräfte in Abhängigkeit zur axialen Lage des Rotors regeln lassen.

Aus der GB 2201841 A geht ein Elektromotor hervor, der ein Außengehäuse aufweist, in dem eine Motorwelle bzw. ein Rotor unter einem axialen Spiel drehbar gelagert ist. Das Gehäuse ist stirnseitig durch einen Deckel verschlossen, an dem ein Permanentmagnet befestigt ist. Im geschlossenen Zustand übt der Permanentmagnet auf das Wellenende eine Magnetkraft aus, um das Axialspiel der Welle zu verringern,

Die DE 10 2005 045 919 A1 offenbart eine Getriebe-Antriebseinheit, die einen Elektromotor umfasst. Der Elektromotor weist eine Welle auf, auf welcher ein Schneckengetriebe angeordnet ist. Ferner weist die Getriebe-Antriebseinheit ein Ausgleichselement zum Ausgleich des Axialspiels der Welle auf, welches an einem Gehäusebauteil angeordnet ist.

Aus der US 2015/0076838 A1 geht eine Antriebseinheit für einen Fensterheber hervor. Die Antriebseinheit ist in einem Gehäuse angeordnet, in welcher Federelemente zur Ausübung einer Axialkraft auf das Ende der Motorwelle vorgesehen sind.

Die DE 3921084 A1 betrifft eine elektrisch angetriebene Membranpumpe. Die Membranpumpe weist einen Schwingankermagneten als Antriebseinheit auf, der durch einen axial federnd gelagerten Ankerschaft gebildet ist. Dabei ist der Ankerschaft über Schwingfedern innerhalb eines Gehäuses der Membranpumpe gelagert.

Aufgabe der vorliegenden Erfindung ist es, eine Pumpe und ein Verfahren zur Verfügung zu stellen, mit denen ein vibrations- und geräuscharmer Motorbetrieb bei Verwendung von insbesondere kostengünstigen Elektromotoren mit axial beweglich gelagerten Motorwellen für jede Einbau- und/oder Gebrauchslage der Pumpe gewährleistet ist. Eine Verringerung oder Beseitigung von Vibrationen und/oder Störgeräuschen soll darüber hinaus in konstruktiv einfacher und kostengünstiger Weise bei möglichst gleichbleibender Baugröße und Leistungsfähigkeit der Pumpe erreicht werden.

Die vorgenannten Aufgaben werden durch eine Pumpe mit den Merkmalen von Anspruch 1 und durch ein Verfahren zur Verringerung oder Beseitigung von Vibrationen und/oder Störgeräuschen bei Pumpen mit den Merkmalen von Anspruch 9 gelöst. Vorteilhafte Ausgestaltungen der Erfindung sind Gegenstand der Unteransprüche.

Die Pumpenbaugruppe der erfindungsgemäßen Pumpe weist wenigstens ein außerhalb des Motorgehäuses angeordnetes Stabilisierungselement zur Verringerung oder zur Beseitigung des axialen Wellenspiels der Motorwelle auf, wobei die Motorwelle durch das Stabilisierungselement unmittelbar, das heißt kontaktgebunden, oder mittelbar, das heißt kontaktlos und/oder berührungslos, mit einer auf die Motorwelle wirkenden axialen Druckkraft oder axialen Zugkraft beaufschlagt wird.

Die Kraftbeaufschlagung der Motorwelle erfolgt somit von außerhalb des Motorgehäuses.

Die Motorwelle ist auf der Seite der mit dem Motorgehäuse verbundenen Gehäuseeinheit durch das Motorgehäuse hindurch geführt. Die zur Verringerung des axialen Wellenspiels der Motorwelle erforderliche Kraft wird auf das freie Ende der Motorwelle ausgeübt, insbesondere stirnseitig. Die Motorwelle ist im Motorgehäuse mit einem axialen Wellenspiel gelagert und/oder mit einem axialen Wellenspiel im Motorgehäuse geführt. Dies bedeutet, dass die Motorwelle ohne die Kraftbeaufschlagung durch das Stabilisierungselement relativ zum Motorgehäuse (geringfügig) verschiebbar ist. Die Erfindung betrifft somit die Verwendung von Standardmotoren, bei denen es aufgrund des Betriebs der Pumpe zu einer Relativbewegung zwischen der Motorwelle einerseits und einem Außengehäuse des Elektromotors andererseits kommen kann. Dieser Relativbewegung wird erfindungsgemäß durch das wenigstens eine Stabilisierungselement vorgebeugt.

Der Elektromotor zum Antrieb der Pumpe bzw. der Motorwelle kann im Wesentlichen aus einem feststehenden Teil (Ständer) und einem rotierenden Teil (Läufer) bestehen, wobei der Ständer und der Läufer Dauermagnete oder elektrische Wicklungen aufweisen, die elektrische Felder erzeugen. Dabei ist der Läufer auf der Motorwelle gelagert, Darüber hinaus können elektrische Anschlüsse an wenigstens einen elektrischen Verbraucher oder elektrischen Energieversorger vorgesehen sein. Die elektrischen Anschlüsse sind vorzugsweise auf einer der Gehäuseeinheit abgewandten Seite aus dem Motorgehäuse geführt, Ansonsten, das heißt mit Ausnahme der Durchführungen für die Motorwelle und die elektrischen Anschlüsse, ist das Motorgehäuse vorzugsweise als in sich geschlossen ausgebildet,

Zur Reduzierung der beschriebenen durch die Konstruktion des Elektromotors grundsätzlich möglichen Relativbewegung zwischen der Motorwelle und dem Motorgehäuse ist erfindungsgemäß das Stabilisierungselement vorgesehen. Das Stabilisierungselement übt eine Kraft, insbesondere eine Axialkraft, aus, die auf das freie Ende der in der Gehäuseeinheit aufgenommenen Motorwelle mittelbar oder unmittelbar wirkt, Dadurch wird das an sich vorhandene axiale Wellenspiel der Motorwelle zumindest verringert, insbesondere gänzlich unterdrückt. Das Motorgehäuse bildet ein Außengehäuse des Elektromotors und umschließt neben elektromotorischen Bauteilen, wie Ständer und Läufer, insbesondere auch Wellenlager der Motorwelle. Die elektromotorischen Bauteile des Elektromotors und die Wellenlager der Motorwelle sind durch das Motorgehäuse gekapselt.

Die Motorwelle erstreckt sich zum überwiegenden Teil innerhalb des Motorgehäuses, ist aber mit einem Wellenende durch eine Außenwandung bzw. Stirnseite des Motorgehäuses hindurchgeführt, wobei das hindurchgeführte Wellenende erfindungsgemäß innerhalb der Gehäuseeinheit angeordnet ist. Die Gehäuseeinheit umschließt dabei, insbesondere vollständig, das freie Ende der Motorwelle. Die Gehäuseeinheit ist mit dem Motorgehäuse lösbar verbunden, beispielsweise durch Verschrauben. Insbesondere ist die Gehäuseeinheit vorzugsweise ausschließlich im Bereich der Außenwandung bzw. Stirnseite mit dem Motorgehäuse verbunden, an der die Motorwelle aus dem Motorgehäuse hindurchgeführt ist. Darüber hinaus ist es grundsätzlich auch möglich, dass die Gehäuseeinheit auch das Motorgehäuse umgibt un dieses insbesondere "einkapselt".

Die Gehäuseeinheit kann ein- oder mehrteilig ausgebildet sein. Vorzugsweise ist die Gehäuseeinheit ein insbesondere spritzgegossenes Kunststoffbauteil. Die Gehäuseeinheit ist lösbar mit dem Motorgehäuse verbunden,

Das axiale Wellenspiel der Motorwelle kann im Nicht-Einbauzustand des Elektromotors, also wenn das Stabilisierungselement (noch) nicht auf die Motorwelle wirkt, vorzugsweise weniger als 2 mm, weiter vorzugsweise weniger als 1 mm, besonders bevorzugt weniger als 500 µm oder auch weniger als 200 µm betragen. Auch ein kleineres axiales Wellenspiel von beispielsweise 50 oder 100 µm lässt sich grundsätzlich durch das erfindungsgemäß vorgesehene Stabilisierungselement verringern oder unterdrücken.

Die Erfindung betrifft im Ergebnis das nachträgliche Ertüchtigen eines Standardmotors, dessen Motorwelle an sich spielbehaftet im Motorgehäuse geführt ist, für den Betrieb in einer Pumpenbaugruppe derart, das die Motorwelle in der Pumpenbaugruppe im Wesentlichen spielfrei angeordnet ist. Das grundsätzlich mögliche axiale Wellenspiel der Motorwelle des Elektromotors ist somit zu unterscheiden von der spielfreien Anordnung der Motorwelle im Einbauzustand des Elektromotors und Betriebszustand der Pumpe bzw. innerhalb der Gehäuseeinheit.

Unter der Formulierung "außerhalb des Motorgehäuses" sind erfindungsgemäß alle Ausführungsformen zu verstehen, bei denen das Stabilisierungselement außerhalb von dem die Motorwelle umgebenden Innenraum des Motorgehäuses angeordnet ist. Die Formulierung "außerhalb des Motorgehäuses" umfasst insbesondere auch solche Ausführungsformen, bei denen das Stabilisierungselement in das Motorgehäuse integriert ist oder einen Teil des Motorgehäuses bildet, wobei jedoch die Motorwelle durch das Stabilisierungselement von außerhalb des Motorgehäuses mit einer axialen Druckkraft oder axialen Zugkraft beaufschlagt wird, um ein konstruktionsbedingtes Wellenspiel der Motorwelle zu verringern oder vollständig zu beseitigen. Der Erfindung liegt der Grundgedanke zugrunde, durch das Stabilisierungselement eine Lagerung bzw. Stützlagerung der Motorwelle von außerhalb des Motorgehäuses bereitzustellen.

Der Elektromotor mit Motorgehäuse und spielbehafteter Motorwelle stellt dabei eine konstruktive vormontierte Baugruppe bzw. ein in die Pumpenbaugruppe integriertes separates Bauteil dar. Erfindungsgemäß ist eine konstruktive Modifikation bzw. Änderung des Aufbaus des Elektromotors nicht erforderlich, um das immanente Wellenspiel der Motorwelle zu verringern oder zu beseitigen. Dadurch lassen sich auch bei Einsatz kostengünstiger Elektromotoren, die eine in axialer Richtung beweglich gelagerte Motorwelle aufweisen, störende Geräusche oder Vibrationen für jede Einbau- und/oder Gebrauchslage der Pumpe ausschließen oder zumindest verringern, die ansonsten beim Motorbetrieb solcher Motoren durch Relativbewegungen der Motorwelle zum Motorgehäuse auftreten können.

Die Beseitigung des axialen Wellenspiels erfolgt erfindungsgemäß unter Einfluss des Stabilisierungselementes in der Einbaulage des Elektromotors. Erfindungsgemäß ist das Stabilisierungselement in der Gehäuseeinheit befestigt oder es bildet einen Teil der Gehäuseeinheit. Ergänzend kann das Stabilisierungselement mit der Motorwelle verbunden und mit der Motorwelle drehbar sein. Ergänzend kann das Stabilisierungselement an dem Motorgehäuse befestigt sein oder es kann ein Teil des Motorgehäuses bilden. Dabei kann es sich bei dem Stabilisierungselement vorzugsweise um ein separates Bauteil handeln, das mit der Gehäuseeinheit oder der Motorwelle oder dem Motorgehäuse verbunden ist. Grundsätzlich kann das Stabilisierungselement aber auch durch einen entsprechend ausgebildeten Gehäuseabschnitt der Gehäuseeinheit oder des Motorgehäuses gebildet werden. Durch eine entsprechende Dimensionierung und Anordnung des Stabilisierungselementes innerhalb der Pumpenbaugruppe, insbesondere durch eine bestimmte Beabstandung des Stabilisierungselements von der Motorwelle auf der Antriebsseite der Motorwelle, ist eine Verringerung oder Beseitigung von Störgeräuschen und/oder Vibrationen bei gleichbleibender Baugröße der Pumpenbaugruppe möglich.

Bei der Erfindung wird die Motorwelle durch das Stabilisierungselement mit einer in axialer Richtung der Motorwelle wirkenden Druck- oder Zugkraft beaufschlagt. Aufgrund der Kraftausübung in axialer Richtung können beim Motorbetrieb auftretende und auf ein immanentes Axialspiel der Motorwelle zurückzuführende Störgeräusche und/oder Vibrationen deutlich verringert oder sogar vollständig beseitigt werden, Die Kräfte können zu einer Vorspannung der Motorwelle im Motorgehäuse und/oder zu einer axialen Verschiebung der Motorwelle im Motorgehäuse führen. Durch Druck- oder Zugkräfte kann die Motorwelle in eine Stellung gebracht werden, in der sie beim Motorbetrieb nicht mehr gegen feststehende Bauteile des Elektromotors anliegt. Die Motorwelle kann durch das Stabilisierungselement auch mit einem Wellenende gegen ein Wellenlager im Motorgehäuse gedrückt werden, so dass beim Motorbetrieb keine relevanten Störgeräusche oder Vibrationen auftreten. Für eine Beseitigung des axialen Wellenspiels der Motorwelle kann es insbesondere vorgesehen sein, dass die Motorwelle aufgrund der Wirkung des Stabilisierungselementes gegen ein gegenüberliegend zur Antriebsseite des Motors im Inneren des Motorgehäuses angeordnetes Wellenlager gedrückt oder gegen ein innenliegendes Wellenlager auf der Antriebsseite des Elektromotors gezogen wird. Das erfindungsgemäße Verfahren sieht in diesem Zusammenhang vor, dass von außen eine auf die Motorwelle wirkende axiale Druck- oder Zugkraft erzeugt wird, um das axiale Wellenspiel zu verringern oder zu beseitigen. Damit lässt sich das Entstehen von Vibrationen und/oder Störgeräuschen beim Pumpenbetrieb in sehr effektiver Weise und unter Ausnutzung der im Inneren der Gehäuseeinheit zur Verfügung stehenden Freiräume verringern oder sogar vollständig beseitigen, ohne dass eine konstruktive Änderung der Baugruppe "Elektromotor" erforderlich ist.

Bei einer Ausführungsform der Erfindung kann das Stabilisierungselement federbelastet sein oder es ist ein Federmittel als Stabilisierungselement vorgesehen, das eine in axialer Richtung der Motorwelle auf die Motorwelle wirkende Federkraft erzeugt, Über das Federelement kann ein Gehäuseteil der Gehäuseeinheit oder ein Gehäuseabschnitt des Motorgehäuses mit der Motorwelle mechanisch gekoppelt sein, Beispielsweise kann zwischen dem Motorgehäuse und einem mit der Motorwelle fest verbundenen Exzenter ein Federelement vorgesehen sein, um die Motorwelle durch die Federkraft vom Motorgehäuse weg zu drücken oder zum Motorgehäuse zu ziehen. Es versteht sich, dass alternativ auch ein Federelement zwischen einem Gehäuseteil der Gehäuseeinheit und dem Exzenter der Motorwelle vorgesehen sein kann, um die Motorwelle entsprechend vorzuspannen,

Bei einer bevorzugten Ausführungsform der Erfindung ist das Stabilisierungselement auf der Antriebsseite des Elektromotors an und/oder in einem der freistehenden Stirnseite der Motorwelle gegenüberliegenden Gehäuseteil der Gehäuseeinheit angeordnet. Insbesondere kann das Stabilisierungselement an und/oder in einem Gehäusedeckel oder einer Gehäusekappe angeordnet sein, der bzw. die lösbar und/oder verschiebbar mit wenigstens einem anderen Gehäuseteil der Gehäuseeinheit verbunden ist. Der freistehende, durch das Motorgehäuse des Elektromotors herausragende Teil der Motorwelle kann in der Gehäuseeinheit gekapselt sein, wenn der Gehäusedeckel in eine Schließ- und Montagestellung gebracht ist. Durch Öffnen des Gehäusedeckels ist ein einfacher Zugriff auf das Stabilisierungselement und/oder das freistehende Wellenende der Motorwelle möglich. Im geschlossenen Zustand des Gehäusedeckels sind dagegen das Stabilisierungselement und das freie Ende der Motorwelle gegen Verschmutzungen geschützt. Die Befestigung des Stabilisierungselementes an und/oder in einem der Motorwelle stirnseitig gegenüberliegenden Gehäuseteil ermöglicht in konstruktiv einfacher Weise und bei gleichbleibender Baugröße der Pumpe die Übertragung ausreichend großer axialer Druck- und/oder Zugkräfte von dem Stabilisierungselement auf die Motorwelle. Hierbei ist das Stabilisierungselement sicher an oder in dem Gehäuseteil gehalten.

Bei einer ersten Ausführungsform der erfindungsgemäßen Pumpe liegt das Stabilisierungselement mittelbar oder unmittelbar stirnseitig gegen die Motorwelle an. Es kommt dann zu einer kontaktgebundenen Verringerung des axialen Wellenspiels, wobei die Motorwelle durch das Stabilisierungselement auf die von der Antriebsseite des Elektromotors abgewandte Motorseite gedrängt und/oder mit einer in axialer Richtung zur abgewandten Motorseite wirkenden Vorspannung beaufschlagt wird.

Um einen niedrigen Gleitreibungswiderstand zu erreichen, kann das Stabilisierungselement für die Kraftübertragung im Wesentlichen punktförmig gegen die Motorwelle anliegen. Insbesondere kann das Stabilisierungselement kugelförmig ausgebildet sein, Alternativ kann vorgesehen sein, dass das Stabilisierungselement in Richtung zur Antriebsseite des Elektromotors spitz zulaufend ausgebildet ist, so dass das Stabilisierungselement mit seiner Spitze gegen die Motorwelle wirkt. Auch dadurch lässt sich ein geringer Gleitreibungswiderstand bei der Drehung der Motorwelle sicherstellen.

Alternativ oder ergänzend kann der durch Gleitreibung zwischen dem Stabilisierungselement und der Motorwelle verursachte Widerstand durch Wahl einer reibungsarmen Materialpaarung niedrig gehalten werden. Das Stabilisierungselement kann in diesem Zusammenhang aus einem Material mit guten Gleit- und Verschleißeigenschaften, beispielsweise aus Polyoxymethylen (POM) und/oder Polytetrafluorethylen (PTFE), bestehen. Die vorgenannten Materialien lassen auch eine kostengünstige Fertigung des Stabilisierungselementes zu. Grundsätzlich besteht jedoch auch die Möglichkeit, das Stabilisierungselement aus einem keramischen Werkstoff und/oder aus Carbon zu fertigen, um einen geringen Gleitreibungswiderstand zwischen dem Stabilisierungselement und der Motorwelle zu gewährleisten.

Um einen Leistungsverlust der Pumpe aufgrund der Kraftbeaufschlagung der Motorwelle mit dem Stabilisierungselement gering zu halten, kann das Stabilisierungselement auch drehbar an dem Gehäuseteil gehalten bzw. gelagert sein. Beim Motorbetrieb kann es dann aufgrund der gegen das Stabilisierungselement anliegenden Motorwelle zu einer Relativbewegung zwischen dem Stabilisierungselement und dem Gehäuseteil kommen, wobei das Stabilisierungselement mit der Motorwelle mitbewegt werden kann.

Es versteht sich zudem, dass das Stabilisierungselement an einem Gehäuseabschnitt des Motorgehäuses gehalten sein kann, das gegen einen mit dem freien Ende der Motorwelle verbundenen Exzenter anliegt und/oder gegen den Exzenter wirkt. Über das Stabilisierungselement kann dann eine Druckkraft auf den Exzenter ausgeübt werden, um die Motorwelle in eine vom Motorgehäuse abgewandte Richtung zu drücken und so das axiale Wellenspiel zu verringern. Das Stabilisierungselement kann auch hier vorzugsweise punktförmig, weiter vorzugsweise als Kugel, ausgebildet sein. Im Übrigen kann das Stabilisierungselement ebenfalls drehbar an dem Gehäuseabschnitt des Motorgehäuses gehalten sein und/oder aus einem verschleißarmen Material bestehen.

Für eine langzeitstabile Übertragung von Druckkräften von dem Stabilisierungselement auf die Motorwelle kann das Stabilisierungselement mit einer Federkraft beaufschlagt sein. Das Stabilisierungselement kann durch ein Federelement in axialer Richtung zur Motorwelle hin vorgespannt sein. Damit ist ein Wirkkontakt zwischen dem Stabilisierungselement und der Motorwelle stets gewährleistet, auch wenn es aufgrund einer beim Motorbetrieb auftretenden rotatorischen Relativbewegung zwischen der Motorwelle und dem gegen die Motorwelle anliegenden Stabilisierungselement zu einem Verschleiß am Stabilisierungselement kommt.

Zur Erzeugung der Federkraft kann beispielsweise eine Membran aus einem elastischen Kunststoff an einem Gehäuseteil der Gehäuseeinheit vorgesehen sein, die gegen das Stabilisierungselement anliegt und durch die das Stabilisierungselement in Richtung zur Motorwelle hin gedrückt wird. Alternativ kann auch das Gehäuseteil als solches aus einem elastomeren Kunststoff gefertigt sein und das Stabilisierungselement vorspannen. Weiter alternativ kann auch ein Federelement, beispielsweise eine Schraubenfeder, vorgesehen sein, um das Stabilisierungselement gegen die Motorwelle anzudrücken.

Bei einer alternativen Ausführungsform der Erfindung kann das Stabilisierungselement eine magnetische Kopplung zwischen der Motorwelle und der Gehäuseeinheit und/oder zwischen der Motorwelle und dem Motorgehäuse zur Verringerung oder zur Beseitigung des axialen Wellenspiels der Motorwelle aufweisen. Die Kopplung wird von außerhalb des an sich geschlossenen Motorgehäuses auf das aus dem Motorgehäuse herausgeführte Wellenende der Motorwelle durchgeführt. Bei dieser Ausführungsform wird die Motorwelle zur Verringerung oder zur Beseitigung des Wellenspiels durch magnetische Feldkräfte berührungslos in einer bestimmten Axialstellung gehalten. Es wird ein Magnetfeld in axialer Richtung erzeugt, das die Motorwelle anzieht oder abstößt, um das der Baueinheit "Elektromotor" immanente axiale Wellenspiel zu verringern und, vorzugsweise, zu beseitigen. Aufgrund der magnetischen Kopplung ist eine reibungsfreie und damit verschleiß- und annähernd leistungsverlustfreie Übertragung der zur Verringerung oder Beseitigung des axialen Wellenspiels der Motorwelle erforderlichen Kräfte möglich. Im Übrigen lässt sich eine Magnetkopplung in einfacher Weise konstruktiv ausgestalten und kostengünstig fertigen,

Um unabhängig von einer Stromversorgung ein ausreichend starkes Magnetfeld zu erzeugen, kann als Stabilisierungselement wenigstens ein Dauermagnet, beispielsweise ausgebildet als Scheibenmagnet oder Ringmagnet, vorgesehen sein oder das Stabilisierungselement kann wenigstens einen solchen Dauermagneten aufweisen. Auch eine elektromagnetische Kopplung ist grundsätzlich möglich. Beispielsweise kann in und/oder an der Gehäuseeinheit und/oder in und/oder an dem Motorgehäuse ein magnetisches Stabilisierungselement angeordnet bzw. gehalten sein oder es kann ein magnetisches Stabilisierungselement direkt mit der Motorwelle verbunden sein, Zur Ausbildung der magnetischen Kopplung können wenigstens zwei magnetische Stabilisierungselemente zusammenwirken oder ein Stabilisierungselement kann mit einem aus einem ferromagnetischen Material bestehenden Bereich oder Abschnitt oder Teil der Gehäuseeinheit oder des Motorgehäuses oder der Motorwelle zusammenwirken. Beispielsweise kann ein konzentrisch zur Motorwelle angeordneter und fest mit der Motorwelle verbundener Ringmagnet vorgesehen sein, der mit einem weiteren an der Gehäuseeinheit oder dem Motorgehäuse befestigten Dauermagneten zusammenwirkt. Gegenüberliegende Magnetpole der Stabilisierungselemente können eine gleiche oder entgegengesetzte Polarität aufweisen, um die Stabilisierungselemente voneinander wegzudrücken oder gegenseitig anzuziehen,

Ein Dauermagnet als Stabilisierungselement kann konzentrisch zur Motorwelle angeordnet sein. Darüber hinaus ist es möglich, dass ein Dauermagnet mit der zusätzlichen Funktion eines Ausgleichsgewichts radial versetzt zur Motorwelle angeordnet ist Bei einer Exzenterpumpe mit einem mit dem freien Ende der Motorwelle verbundenen Exzenter kann wenigstens ein Magnet an der Stelle eines Stabilisierungselementes in den Exzenter integriert sein. Bestehen Ausgleichsgewichte im Exzenter aus einem ferromagnetischen Material, können diese mit einem mit der Gehäuseeinheit oder dem Motorgehäuse verbundenen dauermagnetischen Stabilisierungselement zusammenwirken, um eine magnetische Kopplung zwischen der Gehäuseeinheit und der Motorwelle oder zwischen dem Motorgehäuse und der Motorwelle zu erreichen. Mit dem freien Ende der Motorwelle kann auch eine Scheibe aus einem ferromagnetischen Material fest verbunden sein, die beispielsweise von einem dauermagnetischen Stabilisierungselement an der Gehäuseeinheit oder von einem dauermagnetischen Stabilisierungselement an dem Motorgehäuse angezogen wird, um dadurch die Motorwelle in eine bestimmte Richtung zu bewegen und das Axialspiel der Motorwelle zu verringern.

In der Zeichnung ist die Erfindung anhand von Ausführungsbeispielen näher veranschaulicht. Es zeigen
- Fig. 1: eine schematische Ansicht einer ersten Ausführungsform einer erfindungsgemäßen Pumpenbaugruppe mit einer Gehäuseeinheit und einem Elektromotor, wobei eine mechanische Kopplung zwischen der Gehäuseeinheit und einer Motorwelle des Elektromotors vorgesehen ist,
- Fig. 2: eine schematische Ansicht einer zweiten Ausführungsform einer erfindungsgemäßen Pumpenbaugruppe mit einer magnetischen Kopplung zwischen der Gehäuseeinheit und der Motorwelle und
- Fig. 3: eine schematische Ansicht einer weiteren Ausführungsform einer erfindungsgemäßen Pumpenbaugruppe mit einer magnetischen Kopplung zwischen der Motorwelle und dem Motorgehäuse.

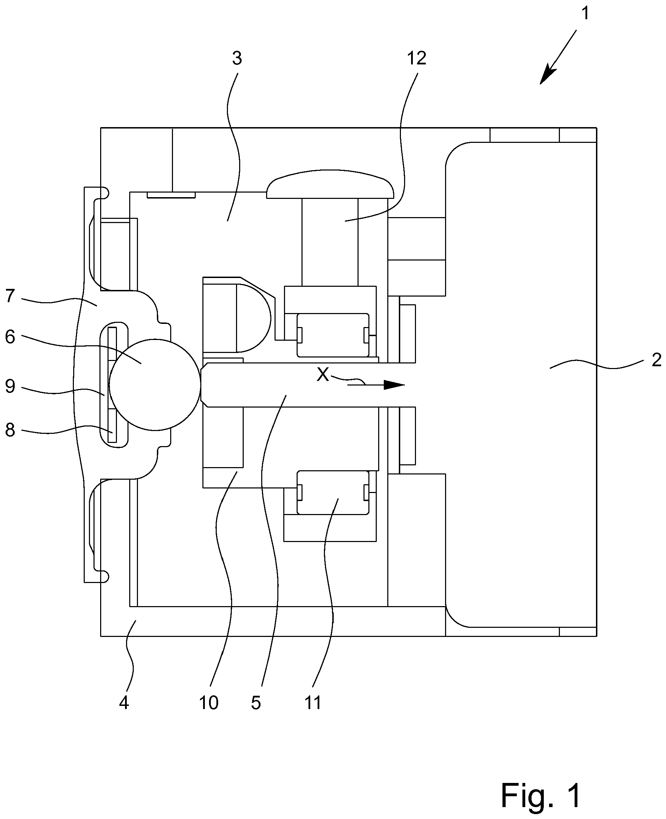

Fig. 1 zeigt schematisch und im Ausschnitt eine Pumpenbaugruppe 1 für eine Miniatur-Membranpumpe bzw. Exzenter-Membranpumpe, die einen Elektromotor 2 und eine mehrteilige Gehäuseeinheit 3 aufweist. Die Membranpumpe eignet sich beispielsweise als Drainagepumpe zum Absaugen von Körperflüssigkeiten oder von Gasen im Wundbereich. Ein Teil der Gehäuseeinheit 3 bildet einen Gehäusedeckel 4. Der Elektromotor 2 weist eine durch ein nicht im Einzelnen dargestelltes Motorgehäuse des Elektromotors 2 freistehende Motorwelle 5 auf. Der Elektromotor 2 mit Motorwelle 5 und Motorgehäuse bildet eine eigenständige Baueinheit, die in Fig. 1 in einer Einbaulage gezeigt ist. Das Motorgehäuse ist mit der Gehäuseeinheit 3 verschraubt. Ebenfalls nicht dargestellt ist, dass die Motorwelle 5 im Motorgehäuse mit einem axialen Wellenspiel gelagert ist, also insbesondere eine Gleitlagerung und keine Kugellagerung der Motorwelle 5 vorgesehen ist, die auch axiale Kräfte aufnehmen kann.

Das Motorgehäuse weist auf einer Antriebsseite des Elektromotors 2 eine Gehäuseöffnung für die Motorwelle 5 auf, durch die die Motorwelle 5 hindurchgeführt ist. Die Lagerung der Motorwelle 5 kann über Sinterlager erfolgen, die lediglich zur Aufnahme von Radialkräften ausgebildet sind. Bei solchen Elektromotoren 2 können an der Motorwelle 5 Bauteile vorgesehen sein, die sich zusammen mit der Motorwelle 5 drehen und in Abhängigkeit von der Anordnung und Ausrichtung des Elektromotors 2 beim Pumpenbetrieb axial gegen das Motorgehäuse oder eine Wellenlagerung im Motorgehäuse arbeiten. Dies kann zu störenden Vibrationen und Geräuschen führen. Durch die Verbindung des Elektromotors 2 mit der Gehäuseeinheit 3 werden Vibrationen auf die Gehäuseeinheit 3 übertragen und, insbesondere dann, wenn eine körpernahe Anordnung der Membranpumpe beim Pumpenbetrieb erforderlich ist, als störend wahrgenommen.

Um Vibrationen und/oder Störgeräusche zu vermeiden, beispielsweise bei Kippen der Exzenter-Membranpumpe, wenn die Motorwelle 5 aus einer beispielsweise horizontalen Lage gebracht wird, weist die dargestellte Pumpenbaugruppe 1 ein Stabilisierungselement 6 auf, das in Form einer Kugel als Stützlager für die Motorwelle 5 dient und unmittelbar stirnseitig gegen das freiliegende Ende der Motorwelle 5 anliegt. Durch das Stabilisierungselement 6 wird die Motorwelle 5 in axialer Richtung X (Fig. 1) auf die der Antriebsseite des Elektromotors 2 gegenüberliegende Seite gedrängt bzw. es wird eine Vorspannung in dieser Richtung erzeugt, was zu einer Verringerung des axialen Wellenspiels der Motorwelle 5 im Motorgehäuse führt.

Wie sich weiter aus Fig. 1 ergibt, wird das Stabilisierungselement 6 mit einer Membran 7 aus einem elastischen Kunststoff an dem Gehäusedeckel 4 gehalten und in Richtung zur Motorwelle 5 vorgespannt. An der Stelle der Membran 7 kann auch ein anderes Federmittel vorgesehen sein. Die Membran 7 ist mit dem Gehäusedeckel 4 verbunden. Um das Eindrücken des Stabilisierungselementes 6 in die Membran 7 zu verhindern und damit langzeitstabil eine ausreichende Druckkraft auf die Motorwelle 5 in axialer Richtung X erzeugen zu können, kann ein Stützring 8 aus Metall vorgesehen sein, der in eine Membrantasche 9 eingesetzt bzw. eingeschoben ist.

Die Motorwelle ist in an sich üblicher Weise drehfest mit einem Exzenter 10 verbunden. Der Exzenter 10 ist über ein Kugellager 11 ebenfalls in an sich üblicher Weise mit einer Pleuelstange 12 verbunden, um eine Verbindung mit einer nicht gezeigten Membran der Membranpumpe herzustellen und die Pumpenfunktion zu gewährleisten.

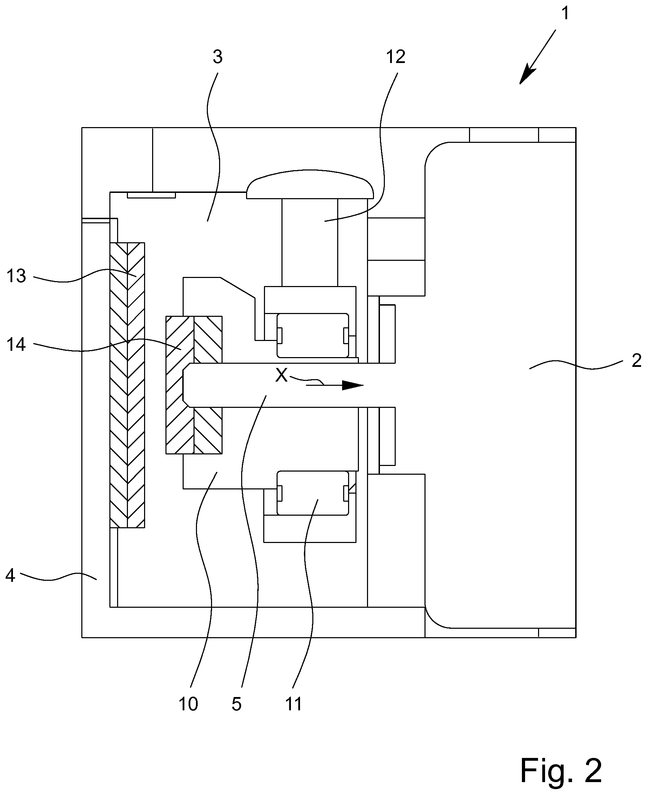

In Fig. 2 ist eine alternative Ausführungsform einer Pumpenbaugruppe 1 einer Membranpumpe gezeigt. Dabei bezeichnen gleiche Bezugszeichen in den Fig. 1 und 2 gleiche Komponenten, weshalb an dieser Stelle auf die vorhergehende Beschreibung dieser Komponenten verwiesen wird.

Abweichend zu der in Fig. 1 dargestellten Pumpenbaugruppe 1 wird zur Verringerung oder zur Beseitigung des axialen Wellenspiels der Motorwelle 5 gemäß Fig. 2 eine magnetische Kopplung zwischen einem an dem Gehäusedeckel 4 innenseitig vorgesehenen Stabilisierungselement 13 und einem konzentrisch zur Motorwelle 5 angeordneten weiteren Stabilisierungselement 14 vorgesehen. Das weitere Stabilisierungselement 14 kann auch mit der zusätzlichen Funktion eines Ausgleichsgewichts versetzt zur Motorwelle 5 angeordnet sein. Bei dem Stabilisierungselement 13 handelt es sich vorzugsweise um einen Scheibenmagneten. Das weitere Stabilisierungselement 14 ist vorzugsweise ein Ringmagnet. Da die Stabilisierungselemente 13, 14 auf einander zugewandten Seiten gleich polarisiert sind, wird die Motorwelle 5 vom Stabilisierungselement 13 abgestoßen und damit in Richtung X zu der von der Antriebsseite des Elektromotors 2 gegenüberliegenden Motorseite gedrängt. Hierdurch wird ein axiales Lagerspiel der Motorwelle 4 im Motorgehäuse verringert, vorzugsweise vollständig beseitigt.

Im Übrigen versteht es sich, dass das Stabilisierungselement 13 und das weitere Stabilisierungselement 14 auf den einander zugewandten Seiten auch unterschiedlich polarisiert sein können, so dass die Motorwelle 5 in Richtung zu dem Gehäusedeckel 4 gezogen wird, was in Abhängigkeit von der konstruktiven Ausgestaltung der Wellenlagerung im Elektromotor 2 ebenfalls zur Verringerung, vorzugsweise zur vollständigen Beseitigung, eines immanenten axialen Lagerspiels der Motorwelle 5 innerhalb des Motorgehäuses führen kann.

Das weitere Stabilisierungselement 14 ist in den Exzenter 10 stirnseitig integriert. Zu diesem Zweck weist der Exzenter 10 eine entsprechende Ringnut auf, in die das weitere Stabilisierungselement 14 eingesetzt ist. Die konzentrische Anordnung des Ringmagneten trägt zu einer hohen Laufruhe des Elektromotors 2 bei.

Nicht dargestellt ist, dass der Exzenter 10 stirnseitig radial versetzt zur Motorwelle angeordnete Ausgleichsgewichte aufweisen kann, die als Stabilisierungselemente vorgesehen sind und durch Dauermagneten gebildet werden können. Auch hiermit lässt sich eine magnetische Kopplung zwischen der Gehäuseeinheit 3 und der Motorwelle 5 erreichen.

Es kann auch lediglich ein Stabilisierungselement 13, 14 vorgesehen sein, das mit einem ferromagnetischen Bereich, Abschnitt oder Teil des Gehäusedeckels 4 oder der Motorwelle 5 zusammenwirkt. Bei der in Fig. 2 gezeigten Ausführungsform kann beispielsweise an der Stelle des Stabilisierungselements 13 eine an dem Gehäusedeckel 4 innenseitig vorgesehene Scheibe aus einem ferromagnetischen Material angeordnet sein, die dazu führt, dass die Motorwelle 5 entgegen der in Fig. 2 gezeigten axialen Richtung X in Richtung zum Gehäusedeckel 4 gezogen wird. Um die Motorwelle 5 in axialer Richtung X zu ziehen, könnte ein entsprechend ausgebildeter ferromagnetischer Bereich auch an dem Motorgehäuse vorgesehen sein. Alternativ ist es auch möglich, an der Stelle des weiteren Stabilisierungselements 14 an einer geeigneten Stelle eine mit der Motorwelle 5 verbundene Scheibe aus einem ferromagnetischen Material vorzusehen, so dass die Scheibe und damit die Motorwelle 5 zu dem magnetischen Stabilisierungselement 13 an dem Gehäusedeckel 4 hingezogen wird.

Alternativ kann auch ein magnetisches Feld zwischen einem am Exzenter 10 fixierten Permanentmagneten und einem am Motorgehäuse fixierten Permanentmagneten erzeugt werden, um ein Axialspiel der Motorwelle 5 zu verringern oder zu beseitigen.

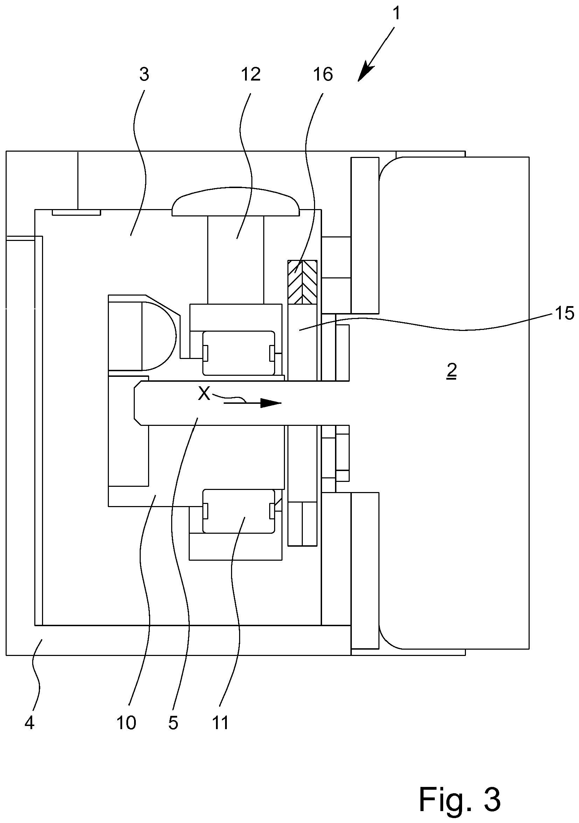

In Fig. 3 ist eine andere Ausführungsform einer Pumpenbaugruppe 1 für eine Exzenter-Membranpumpe gezeigt, wobei wiederum gleiche Bezugszeichen in den Fig. 1, 2 und 3 gleiche Komponenten bezeichnen, weshalb an dieser Stelle auf die vorhergehende Beschreibung dieser Komponenten verwiesen wird.

Bei der in Fig. 3 gezeigten Ausführungsform ist eine Scheibe 15 vorgesehen, die radial innenliegend fest mit der Motorwelle 5 und radial außenliegend fest mit einem Ringmagneten als Stabilisierungselement 16 verbunden ist Die Scheibe 15 ist an dem durch das Motorgehäuse des Elektromotors 2 geführten freistehenden Ende der Motorwelle 5 benachbart zum Motorgehäuse angeordnet. Für eine magnetische Kopplung kann das Motorgehäuse aus einem magnetisierbarem (ferromagnetischen) Material bestehen. Auch eine Deckplatte oder Befestigungsschrauben oder dergleichen können aus einem magnetisierbaren Material bestehen. Dies führt dazu, dass die Motorwelle 5 in axialer Richtung X zum Motorgehäuse gezogen wird, was wiederum zu einer Verringerung oder Beseitigung des immanenten axialen Wellenspiels führen kann. Es versteht sich, dass auch hier im Bereich des Motorgehäuses ein weiteres magnetisches Stabilisierungselement vorgesehen sein kann, um das mit der Motorwelle 5 verbundene Stabilisierungselement 16 noch stärker anzuziehen (oder abzustoßen) und damit eine Verstellung der Motorwelle 5 in die eine oder in die andere Richtung zu bewirken,

**Bezugszeichenliste:**

| | | | |
|---|---|---|---|
| 1 | Pumpenbaugruppe | 10 | Exzenter |
| 2 | Elektromotor | 11 | Kugellager |
| 3 | Gehäuseeinheit | 12 | Pleuelstange |
| 4 | Gehäusedeckel | 13 | Stabilisierungselement |
| 5 | Motorwelle | 14 | Stabilisierungselement |
| 6 | Stabilisierungselement | 15 | Scheibe |
| 7 | Membran | 16 | Stabilisierungselement |
| 8 | Stützring | | |
| 9 | Membrantasche | | |

## Patentansprüche

1. Pumpe, insbesondere Miniaturpumpe, mit einer Pumpenbaugruppe (1), wobei die Pumpenbaugruppe (1) einen Elektromotor (2) und eine Gehäuseeinheit (3) aufweist, wobei der Elektromotor (2) elektromotorische Bauteile und eine durch ein Motorgehäuse des Elektromotors (2) freistehende Motorwelle (5) aufweist und das Motorgehäuse lösbar mit der Gehäuseeinheit (3) verbunden ist, wobei die Motorwelle (5) durch Wellenlager im Motorgehäuse mit einem axialen Wellenspiel gelagert ist, wobei der Elektromotor (2) mit der Motorwelle (5) und dem Motorgehäuse eine eigenständige Baueinheit bildet, wobei das Motorgehäuse ein Außengehäuse des Elektromotors (2) bildet, wobei sich die Motorwelle (5) zum überwiegenden Teil innerhalb des Motorgehäuses erstreckt und mit einem Wellenende durch eine stirnseitige Außenwandung des Motorgehäuses hindurchgeführt ist, wobei das hindurchgeführte Wellenende von der Gehäuseeinheit (3) umschlossen ist, wobei wenigstens ein außerhalb des Motorgehäuses angeordnetes Stabilisierungselement (6, 13, 14, 16) zur Verringerung oder zur Beseitigung des axialen Wellenspiels der Motorwelle (5) vorgesehen ist, wobei die Motorwelle (5) durch das Stabilisierungselement (6, 13, 14, 16) mit einer auf die Motorwelle (5) wirkenden axialen Druckkraft oder axialen Zugkraft beaufschlagt wird und wobei das Stabilisierungselement (6, 13, 14, 16) in der Gehäuseeinheit (3) befestigt ist oder einen Teil der Gehäuseeinheit (3) bildet,
**dadurch gekennzeichnet,**
**dass** die elektromotorischen Bauteile des Elektromotors (2) die Wellenlager der Motorwelle (5) durch das Motorgehäuse gekapselt sind.

2. Pumpe nach Anspruch 1, **dadurch gekennzeichnet, dass** das wenigstens eine Stabilisierungselement (14,16) mit der Motorwelle (5) verbunden und mit der Motorwelle (5) drehbar ist.

3. Pumpe nach einem der vorhergehenden Ansprüche, **dadurch gekennzeichnet, dass** das wenigstens eine Stabilisierungselement (6) federbelastet ist und/oder dass ein Federmittel als Stabilisierungselement vorgesehen ist, so dass eine in axialer Richtung der Motorwelle (5) auf die Motorwelle (5) wirkende Federkraft erzeugt wird.

4. Pumpe nach einem der vorhergehenden Ansprüche, **dadurch gekennzeichnet, dass** das Stabilisierungselement (6, 13) an und/oder in einem der freistehenden Stirnseite der Motorwelle (5) gegenüberliegenden Gehäuseteil der Gehäuseeinheit (3) angeordnet ist, wobei, vorzugsweise, das Stabilisierungselement (6) stirnseitig gegen die Motorwelle (5) anliegt, insbesondere punktförmig, und, weiter vorzugsweise, als Kugel ausgebildet ist.

5. Pumpe nach einem der vorhergehenden Ansprüche, **dadurch gekennzeichnet. dass** das Stabilisierungselement (6) drehbar an einem Gehäuseteil der Gehäuseeinheit (3) gehalten ist und/oder dass das Stabilisierungselement (6) aus einem verschleißarmen Kunststoff, insbesondere POM und/oder PTFE, besteht.

6. Pumpe nach einem der vorhergehenden Ansprüche, **dadurch gekennzeichnet, dass** das Stabilisierungselement (13, 14, 16) zur Verringerung oder zur Beseitigung des axialen Wellenspiels der Motorwelle (5) eine magnetische Kopplung zwischen der Motorwelle (5) und der Gehäuseeinheit und/oder zwischen der Motorwelle (5) und dem Motorgehäuse aufweist.

7. Pumpe nach Anspruch 6, **dadurch gekennzeichnet, dass** als Stabilisierungselement (13, 14, 16) ein Dauermagnet vorgesehen ist oder dass das Stabilisierungselement wenigstens einen Dauermagneten aufweist.

8. Pumpe nach Anspruch 6 oder 7, **dadurch gekennzeichnet, dass** zur Ausbildung der magnetischen Kopplung wenigstens zwei magnetische Stabilisierungselemente (13, 14) zusammenwirken oder dass das Stabilisierungselement (16) mit einem Bereich oder Abschnitt oder Teil der Gehäuseeinheit (3) oder des Motorgehäuses oder der Motorwelle (5) aus einem ferromagnetischen Material zusammenwirkt.

9. Verfahren zur Verringerung oder Beseitigung von Vibrationen und/oder Störgeräuschen bei einer Pumpe, insbesondere bei einer Miniaturpumpe, nach einem der vorhergehenden Ansprüche, wobei mit dem wenigstens einen Stabilisierungselement (6, 13, 14, 16) eine von außerhalb des Motorgehäuses auf die Motorwelle (5) wirkende axiale Druck- oder Zugkraft erzeugt wird, um das axiale Wellenspiel zu verringern oder zu beseitigen, und wobei die elektromotorischen Bauteile des Elektromotors (2) sowie die Wellenlager der Motorwelle (5) durch das Motorgehäuse gekapselt werden.

## Claims

1. A pump, in particular a miniature pump, comprising a pump assembly (1), the pump assembly (1) having an electric motor (2) and a housing unit (3), the electric motor (2) having electromotive components and a motor shaft (5) that is free-standing through a motor housing of the electric motor (2), and the motor housing being detachably connected to the housing unit (3), the motor shaft (5) being supported by shaft bearings in the motor housing with an axial shaft play, the electric motor (2) together with the motor shaft (5) and the motor housing forming an independent structural unit, the motor housing forming an outer housing of the electric motor (2), the motor shaft (5) extending for the most part within the motor housing and being guided by a shaft end through an end outer wall of the motor housing, the guided-through shaft end being enclosed by the housing unit (3), at least one stabilising element (6, 13, 14, 16) arranged outside the motor housing being provided for reducing or eliminating the axial shaft play of the motor shaft (5), the motor shaft (5) being acted upon by the stabilising element (6, 13, 14, 16) with an axial pressure force or axial tensile force that acts on the motor shaft (5) and the stabilising element (6, 13, 14, 16) being fixed in the housing unit (3) or forming part of the housing unit (3), **characterised in that** the electromotive components of the electric motor (2) and the shaft bearings of the motor shaft (5) are encapsulated by the motor housing.

2. The pump according to claim 1, **characterised in that** the at least one stabilising element (14, 16) is connected to the motor shaft (5) and is rotatable together with the motor shaft (5).

3. The pump according to any one of the preceding claims, **characterised in that** the at least one stabilising element (6) is spring-loaded and/or **in that** a spring means is provided as a stabilising element, such that a spring force acting on the motor shaft (5) in the axial direction of the motor shaft (5) is produced.

4. The pump according to any one of the preceding claims, **characterised in that** the stabilising element (6, 13) is arranged on and/or in a housing part of the housing unit (3) opposite the free-standing end face of the motor shaft (5), the stabilising element (6) preferably abutting the motor shaft (5), in particular in a punctiform manner, and more preferably being designed as a ball.

5. The pump according to any one of the preceding claims, **characterised in that** the stabilising element (6) is rotatably held on a housing part of the housing unit (3) and/or **in that** the stabilising element (6) consists of a low-wear plastics material, in particular POM and/or PTFE.

6. The pump according to any one of the preceding claims, **characterised in that** the stabilising element (13, 14, 16) has, for reducing or eliminating the axial shaft play of the motor shaft (5), a magnetic coupling between the motor shaft (5) and the housing unit and/or between the motor shaft (5) and the motor housing.

7. The pump according to claim 6, **characterised in that** a permanent magnet is provided as the stabilising element (13, 14, 16) or **in that** the stabilising element has at least one permanent magnet.

8. The pump according to claim 6 or 7, **characterised in that** at least two magnetic stabilising elements (13, 14) cooperate to form the magnetic coupling or **in that** the stabilising element (16) cooperates with a region or portion or part of the housing unit (3) or of the motor housing or of the motor shaft (5) made of a ferromagnetic material.

9. A method for reducing or eliminating vibrations and/or noise in a pump, in particular in a miniature pump according to any one of the preceding claims, an axial pressure force or tensile force that acts on the motor shaft (5) from outside the motor housing being produced by the at least one stabilising element (6, 13, 14, 16), in order to reduce or eliminate the axial shaft play, and wherein the electromotive components of the electric motor (2) and the shaft bearings of the motor shaft (5) are encapsulated by the motor housing.

## Revendications

1. Pompe, en particulier pompe miniature, comprenant un module de pompe (1), dans laquelle le module de pompe (1) comporte un moteur électrique (2) et une unité de boîtier (3), dans laquelle le moteur électrique (2) comporte des composants électromoteurs et un arbre de moteur (5) se dressant librement à travers un boîtier de moteur du moteur électrique (2) et le boîtier de moteur est raccordé de manière amovible à l'unité de boîtier (3), dans laquelle l'arbre de moteur (5) est logé à l'aide d'un palier d'arbre dans le boîtier de moteur présentant un jeu d'arbre axial, dans laquelle le moteur électrique (2) forme, avec l'arbre de moteur (5) et le boîtier de moteur, une unité structurelle indépendante, dans laquelle le boîtier de moteur forme un boîtier extérieur du moteur électrique (2), dans laquelle l'arbre de moteur (5) s'étend en majeure partie à l'intérieur du boîtier de moteur et passe à l'aide d'une extrémité d'arbre à travers une paroi extérieure frontale du boîtier de moteur, dans laquelle l'extrémité d'arbre passée à travers est entourée par l'unité de boîtier (3), dans laquelle au moins un élément de stabilisation (6, 13, 14, 16), disposé à l'extérieur du boîtier de moteur, est situé pour réduire ou pour éliminer le jeu d'arbre axial de l'arbre de moteur (5), dans laquelle l'arbre de moteur (5) est soumis, à l'aide de l'élément de stabilisation (6, 13, 14, 16), à une force de compression axiale ou une force de traction axiale agissant sur l'arbre de moteur (5) et dans laquelle l'élément de stabilisation (6, 13, 14, 16) est fixé dans l'unité de boîtier (3) ou forme une partie de l'unité de boîtier (3), **caractérisée en ce que** les composants électromoteurs du moteur électrique (2) ainsi que le palier d'arbre de l'arbre de moteur (5) sont encapsulés par le boîtier de moteur.

2. Pompe selon la revendication 1, **caractérisée en ce que** l'au moins un élément de stabilisation (14, 16) est raccordé à l'arbre de moteur (5) et peut tourner avec l'arbre de moteur (5).

3. Pompe selon l'une quelconque des revendications précédentes, **caractérisée en ce que** l'au moins un élément de stabilisation (6) est chargé par ressort et/ou qu'un moyen à ressort est conçu sous la forme d'élément de stabilisation, de telle sorte qu'une force de ressort, agissant sur l'arbre de moteur (5) dans la direction axiale de l'arbre de moteur (5), est générée.

4. Pompe selon l'une quelconque des revendications précédentes, **caractérisée en ce que** l'élément de stabilisation (6, 13) est disposé sur et/ou dans une partie de boîtier de l'unité de boîtier (3) opposée à la face frontale se dressant librement de l'arbre de moteur (5), dans laquelle, de préférence, l'élément de stabilisation (6) s'appuie sur la face frontale contre l'arbre du moteur (5), en particulier est conçu en forme de point et, plus préférablement, sous la forme d'une sphère.

5. Pompe selon l'une quelconque des revendications précédentes, **caractérisée en ce que** l'élément de stabilisation (6) est maintenu rotatif sur une partie de boîtier de l'unité de boîtier (3) et/ou que l'élément de stabilisation (6) est constitué d'une matière plastique à faible usure, en particulier en POM et/ou en PTFE.

6. Pompe selon l'une quelconque des revendications précédentes, **caractérisée en ce que** l'élément de stabilisation (13, 14, 16), pour réduire ou éliminer le jeu d'arbre axial de l'arbre de moteur (5), comporte un accouplement magnétique entre l'arbre de moteur (5) et l'unité de boîtier et/ou entre l'arbre de moteur (5) et le boîtier de moteur.

7. Pompe selon la revendication 6, **caractérisée en ce qu'**un aimant permanent est conçu sous la forme d'élément de stabilisation (13, 14, 16) ou que l'élément de stabilisation comporte au moins un aimant permanent.

8. Pompe selon la revendication 6 ou 7, **caractérisée en ce qu'**au moins deux éléments de stabilisation (13, 14) magnétiques coopèrent pour former l'accouplement magnétique ou que l'élément de stabilisation (16) coopère avec une zone ou une section ou une partie de l'unité de boîtier (3) ou du boîtier de moteur ou de l'arbre moteur (5) en un matériau ferromagnétique.

9. Procédé de réduction ou d'élimination des vibrations et/ou du bruit parasite dans une pompe, en particulier dans une pompe miniature selon l'une quelconque des revendications précédentes, dans lequel, à l'aide d'au moins un élément de stabilisation (6, 13, 14, 16), une force de compression axiale ou une force de traction, agissant de l'extérieur du boîtier de moteur sur l'arbre de moteur (5), est générée pour réduire ou éliminer le jeu d'arbre axial et dans lequel les composants électromoteurs du moteur électrique (2) et le palier d'arbre de l'arbre de moteur (5) sont encapsulés à l'aide du boîtier de moteur.
